# EUROPÄISCHE PATENTSCHRIFT

(11) **EP 2 078 362 B1**
(45) Veröffentlichungstag und Bekanntmachung des Hinweises auf die Patenterteilung: **09.02.2011**
(21) Anmeldenummer: 07820289.2
(22) Anmeldetag: 18.09.2007
(51) Int. Cl.: H04B 10/08

(54) **VERFAHREN ZUR ERMITTLUNG DES OPTISCHEN SIGNAL-RAUSCH-VERHÄLTNISSES UND EMPFANGSEINRICHTUNG FÜR EIN OPTISCHES ÜBERTRAGUNGSSYSTEM**
METHOD FOR DETERMINING THE OPTICAL SIGNAL-TO-NOISE RATIO AND RECEIVER DEVICE FOR AN OPTICAL TRANSMISSION SYSTEM
PROCÉDÉ DE DÉTERMINATION D'UN RAPPORT SIGNAL/BRUIT OPTIQUE ET DISPOSITIF DE RÉCEPTION POUR UN SYSTÈME DE TRANSMISSION OPTIQUE

(30) Priorität: 25.09.2006 DE 102006045134
(43) Veröffentlichungstag der Anmeldung: 15.07.2009
(73) Patentinhaber: Nokia Siemens Networks GmbH & Co. KG, 81541 München (DE)
(72) Erfinder: KRUMMRICH, Peter, 81379 München (DE)
(86) Internationale Anmeldenummer: PCT/EP2007/059826
(87) Internationale Veröffentlichungsnummer: WO 2008/037621

(56) Entgegenhaltungen:
- EP-A- 0 903 874
- EP-A- 0 903 878
- US-A1- 2002 149 812

## Beschreibung

Die Erfindung betrifft ein Verfahren zur Ermittlung des optischen Signal-Rausch-Verhältnisses für ein optisches Übertragungssystem und eine Empfangseinrichtung für ein optisches Übertragungssystem nach dem Oberbegriff des Patentanspruchs 6.

Die Übertragungskapazität optischer Übertragungssysteme lässt sich durch das Wellenlängen-Multiplexen von Kanälen (WDM, Wavelength Division Multiplexing), d. h. die Übertragung mehrerer Kanäle in einer Faser bei unterschiedlichen Wellenlängen, unter Beibehaltung der vorhandenen Glasfaser-Infrastruktur steigern. Probleme bei der Übertragung bereitet die Wellenlängenabhängigkeit einer Reihe von optischen Komponenten und von Effekten entlang der Glasfaser. Diese führt im Allgemeinen dazu, dass die Kanäle am Ende der Strecke unterschiedliche Pegel, Signal-Rauschabstände und Signalverzerrungen aufweisen, was zu unterschiedlichen Signalqualitäten der einzelnen Kanäle führt. Ziel einer Streckenauslegung bzw. Optimierung sollte jedoch sein, für alle Kanäle am Ende der Strecke die gleiche Signalqualität zu erreichen.

Die Signalqualität eines Kanals hängt unter anderem vom optischen Signal-Rauschverhältnis (engl. "optical signal to noise ratio", abgekürzt OSNR) ab. Die OSNR-Verteilung am Streckenende wird durch die Kanalpegelverteilungen an den Eingängen der optischen Verstärker und deren Rauschzahlspektren sowie durch Mehrfach-Reflexionen bzw. Mehrwegeausbreitung bestimmt. Das OSNR ist im Allgemeinen definiert als Quotient aus der mittleren Signalleistung und der mittleren Rauschleistung bezogen auf ein definiertes Wellenlängenintervall. Typischerweise werden Intervallbreiten von 1 nm oder 0.1 nm entsprechend einem Frequenzintervall von 125 GHz bzw. 12.5 GHz bei 1550 nm verwendet. Wird bei der Rauschleistung nur der Beitrag der verstärkten spontanen Emission (engl. "amplified spontaneous emission", abgekürzt ASE) der optischen Verstärker berücksichtigt, so spricht man vom Verhältnis aus Signalzur ASE-Leistung (P_{Sig}/P_{ASE}), welches im Folgenden als OSAR abgekürzt wird.

Um gleiche OSNR-Verteilungen am Streckenende zu erhalten, wird das Verfahren der Preemphase der Kanalpegelverteilung am Streckenanfang eingesetzt. Die gängigste Methode ist dabei, die Pegelverteilung am Streckenanfang so zu wählen, dass die Kanäle am Streckenende alle den gleichen Signal-Rauschabstand aufweisen. Wenn das System rauschbegrenzt arbeitet und Signalverzerrungen keine Rolle spielen, ergibt diese OSNR-Balance am Streckenende den günstigsten Betriebszustand.
Ein Verfahren zur Ermittlung des optischen Signal-Rousch-Verhältnisses nach dem Stand der Technik ist aus EP-A0903874 Gekennt.

Es existieren zahlreiche Methoden zur Ermittlung des OSNR. Üblicherweise wird das OSNR durch optische Messungen z.B. mit Hilfe eines optischen Spektrum-Analysators bestimmt. Dabei wird die Leistung eines Signals in einem Kanal bei der Kanalwellenlänge und die Rauschleistung der ASE bei etwas kürzeren und längeren Wellenlängen gemessen. Aus den beiden ASE-Leistungen abseits des Kanals lässt sich die ASE-Leistung bei der Kanalwellenlänge interpolieren und damit das OSAR berechnen. Bei sehr kleinen Kanalabständen von beispielsweise 25 oder 50 GHz oder wenn entlang der Übertragungsstrecke schmalbandige Filter zum Einsatz kommen, sind die Werte für die Signalleistung und die Rauschleistung schwer zu trennen, so dass eine OSAR-Messung im laufenden Betrieb praktisch nicht möglich ist. Bei einem anderen optischen Verfahren, dem so genannten "Polarization Nulling"-Verfahren wird das Signal aufgrund seiner definierten Polarisation mittels Polarisationsfilter vom unpolarisierten Rauschen getrennt. Dieses Verfahren ist jedoch recht ungenau, z. B. bei teilweiser Depolarisation des Datensignals aufgrund von Polarisationsmodendispersion. Außerdem ist der Aufwand wegen einer zusätzlich notwendigen Polarisationsregelung relativ hoch. Bei einer weiteren optischen Methode wird das OSNR durch kurzzeitiges Abschalten des zu messenden Kanals im Sub-Millisekundenbereich bestimmt, was aber nicht im laufenden Betrieb möglich ist.

Es existieren ferner elektrische Methoden zur Ermittlung des OSNR, bei denen das OSNR nach der opto-elektrischen Wandlung eines Datensignals im Empfänger bestimmt wird. In einer älteren Patentanmeldung (Anmeldenr. 10 2006 032 545.1) ist ein Verfahren offenbart, in dem nach der opto-elektrischen Wandlung eines optischen Datensignals, dem elektrischen Datensignal unterschiedliche Rauschströme hinzugefügt und für jeden Rauschstrom eine optimale Entscheiderschwelle für das mit diesem Rauschstrom versehene elektrische Datensignal ermittelt wird. Aus den Wertepaaren der optimalen Entscheiderschwelle und dem hinzugefügten Rauschstrom werden anschließend nach einer, auf einem Rauschmodell basierenden Rechenvorschrift Werte für einen mittleren Signalstrom und einen mittleren Rauschstrom der verstärkten spontanen Emission bestimmt und aus deren Quotient das optische Signal-Rausch-Verhältnis OSNR berechnet. Allerdings ist der Auswertungsprozess dieses Verfahrens mit großem rechnerischem Aufwand verbunden.

Es ist die Aufgabe der vorliegenden Erfindung, ein einfaches Verfahren anzugeben, bei dem das OSAR eines optischen Übertragungssystems bestimmt wird. Es ist eine weitere Aufgabe der Erfindung, eine entsprechende Anordnung anzugeben.

Die erste Aufgabe wird durch ein Verfahren mit den Merkmalen des Patentanspruchs 1 gelöst. Die weitere Aufgabe wird durch eine Empfangseinrichtung mit den Merkmalen des Patentanspruchs 6 gelöst.

Erfindungsgemäß wird empfangsseitig einem optischen Datensignal ein optisches Rauschsignal hinzugefügt und eine Signalqualität des empfangenen Datensignals ermittelt. Die Größe des hinzugefügten Rauschsignals wird variiert und eine Funktion der Signalqualität des empfangenen Datensignals in Abhängigkeit vom hinzugefügten Rauschsignal wird ermittelt. Anschließend wird für kleine Werte des hinzugefügten Rauschsignals eine erste Gerade und für große Werte des hinzugefügten Rauschsignals wird eine zweite Gerade an die zuvor ermittelte Funktion angenähert. Aus dem Schnittpunkt der ersten Geraden mit der zweiten Geraden wird das OSAR abgelesen. Durch das kontrollierte Hinzufügen zusätzlicher ASE wird somit auf die vorhandene ASE rückgeschlossen und das optische Signal-Rausch-Verhältnis, im Sinne des Verhältnisses aus optischem Signal- zur ASE-Leistung, bestimmt. Das erfindungsgemäße Verfahren eignet sich insbesondere für DWDM-Systeme, weil es auch bei sehr kleinen Kanalabständen oder bei schmalbandiger optischer Filterung entlang der Strecke funktioniert

Die Signalqualität eines empfangenen Datensignals wird durch den so genannten Q-Faktor angegeben. In Ausführungsbeispielen der Erfindung kann der Q-Parameter anhand der Bitfehlerrate, anhand der Augenöffnung eines Augendiagramms oder durch Ermittlung von Amplituden-Histogrammen auf die übliche Weise ermittelt werden und darüber hinaus nun vorteilhaft zur Ermittlung des das optische Signal-Rausch-Verhältnis verwendet werden.

In einer Ausführungsvariante werden nach Ermittlung der OSAR-Werte für ein WDM-Signal die Leistungspegel der Kanäle auf der Sendeseite solange eingestellt, bis für alle Kanäle des WDM-Signals am Streckenausgang gleiche OSAR-Werte vorliegen. Dadurch wird vorteilhaft mittels des erfindungsgemäßen Verfahrens eine Preemphase realisiert.

Diese Preemphase kann in einer weiteren Ausgestaltung der Erfindung auch auf eine so genannte Q-Preemphase mit gleichen Q-Werten am Streckenausgang erweitert werden.

Das erfindungsgemäße Verfahren kann für ein WDM-System mittels einer Empfangseinrichtung nach Anspruch 6 einfach realisiert werden. Dazu ist im Bereich des Demultiplexers mindestens eine regelbare optische Rauschquelle und eine Steuer- und Regeleinheit mit mindestens zwei Anschlüssen vorgesehen, wobei der erste Anschluss der Steuer- und Regeleinheit mit einem Eingang der Rauschquelle und der zweite Anschluss mit einem Ausgang mindestens einer Empfangseinheit der einzelnen Kanäle verbunden ist. Die Steuer- und Regeleinheit ermittelt in Abhängigkeit von den in der Rauschquelle eingestellten ASE-Leistungen und der Signalqualität der einzelnen Kanäle das optische Signal-Rausch-Verhältnis.

In einer Ausführungsvariante der erfindungsgemäßen Empfangseinrichtung ist die regelbare Rauschquelle vor dem Demultiplexer angeordnet. Das ASE Rauschsignal kann in diesem Fall entweder über einen Koppler dem WDM-Signal hinzugefügt werden oder durch Erzeugen zusätzlichen Rauschens beim letzten Verstärker der Strecke. Diese Varianten besitzen den Vorteil, dass zur Durchführung des erfindungsgemäßen Verfahrens nur eine Rauschquelle benötigt wird. Da durch das Hinzufügen von Rauschen außer dem zu vermessenden Kanal auch andere Kanäle gestört werden, wird diese Ausführungsvariante vor Inbetriebnahme des optischen Übertragungssystems eingesetzt.

In einer anderen Ausführungsvariante der erfindungsgemäßen Empfangseinrichtung sind hinter dem Demultiplexer regelbare Rauschquellen kanalweise angeordnet. Diese Ausführungsvariante erlaubt vorteilhaft eine Messung des OSAR im laufenden Betrieb.

Weitere vorteilhafte Ausbildungen der Erfindung sind in den Unteransprüchen sowie in den Ausführungsbeispielen angegeben.

Die Erfindung wird nun anhand von Ausführungsbeispielen unter Zuhilfenahme der Figuren erläutert.

Es zeigen
- Fig. 1a: ein Blockschaltbild der erfindungsgemäßen Anord- nung zur Ermittlung des OSAR
- Fig. 1b: eine graphische Darstellung des Q-Faktors der Signalqualität in Abhängigkeit vom normierten hinzugefügten ASE-Rauschsignal
- Fig. 2: ein Blockschaltbild eines optischen Übertra- gungssystems mit Mitteln zur Bestimmung des OSAR und zur Durchführung einer Preemphase
- Fig. 3: ein Blockschaltbild einer Ausführungsvariante des optischen Übertragungssystems mit Mitteln zur Bestimmung des OSAR und zur Durchführung ei- ner Preemphase

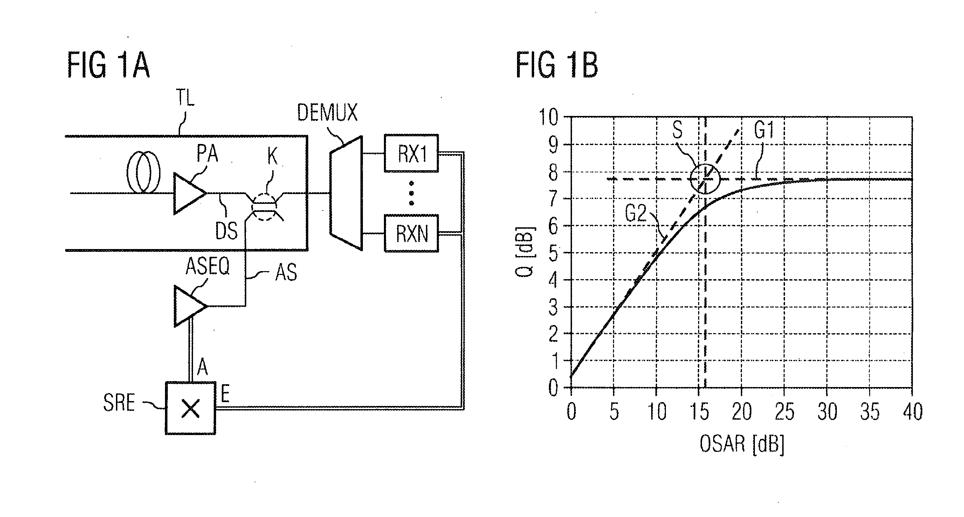

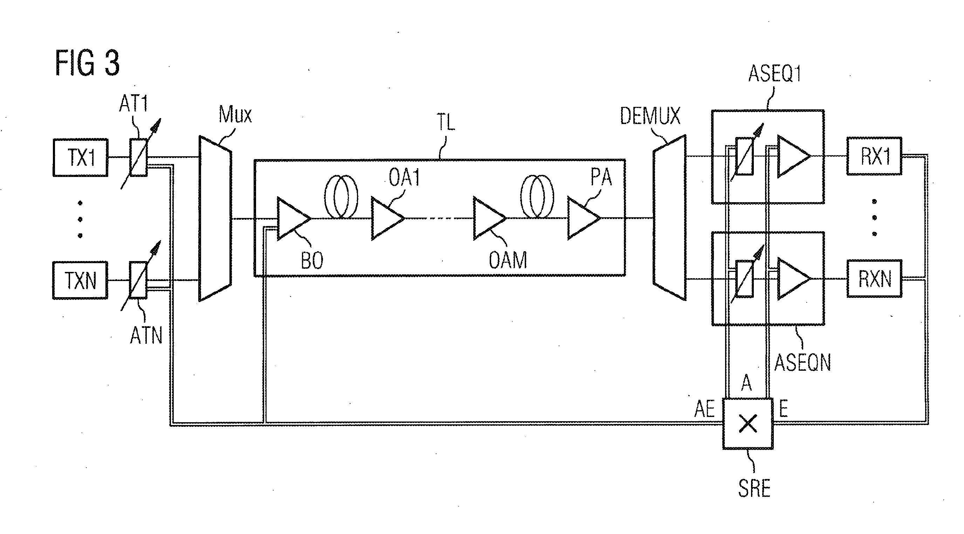

Das Blockschaltbild aus Fig. 1a zeigt den empfangsseitigen Teil eines optischen Übertragungssystems mit Wellenlängen-Multiplex. Dem letzten optischen Verstärker der Übertragungsstrecke TL, dem so genannten Vorverstärker PA, folgt ein Demultiplexer DEMUX, in dem das optische WDM-Datensignal DS, in seine Einzelkanalsignale aufgeteilt wird. Hinter dem Demultiplexer werden die Datensignale der einzelnen Kanäle den einzelnen Empfangseinheiten RX1 ... RXN zugeführt. Zur Bestimmung des Verhältnisses der Signal- zur ASE-Leistung OSAR wird dem Datensignal DS über den Koppler K ein optisches Rauschsignal AS zugeführt. Bei dem optischen Rauschsignal handelt es sich um zusätzliche ASE, die mit Hilfe einer kalibrierten Quelle ASEQ erzeugt wird. Als ASE-Quelle kann beispielsweise ein mit einem Element der Seltenen Erden dotierter Faserverstärker oder auch ein Halbleiterverstärker verwendet werden. Statt einer zur Übertragungsstrecke TL zusätzlich hinzugefügten Rauschquelle kann grundsätzlich auch eine Rauschquelle aus einer Kombination aus Preamplifier und einem variablen Dämpfungsglied, das dem optischen Preamplifier vorgeschaltet ist, verwendet werden (siehe dazu Ausführungsvariante von Fig. 3). Die Rauschquelle ASEQ wird von einer Steuer- und Regeleinheit SRE gesteuert. Die Steuer- und Regeleinheit SRE variiert die ASE-Leistung der Quelle ASEQ und ermittelt die jeweils resultierende, in den Empfängern gemessene Signalqualität. Aus dem Zusammenhang zwischen der Signalqualität in Abhängigkeit von dem hinzugefügten optischen Rauschen wird erfindungsgemäß das Verhältnis der Signal- zur ASE-Leistung OSAR ermittelt.

Die Messung der Signalqualität innerhalb der jeweiligen Empfangseinheiten RX1 bis RXN kann beispielsweise durch Messungen des Q-Faktors erfolgen. Es existieren vielfache Möglichkeiten, die Signalqualität in den einzelnen Kanälen quantitativ zu erfassen. Dazu gehört die Aufnahme eines Amplituden-Histogramms, eines Augendiagramms oder die Messung der Bitfehlerrate (engl. "bit error rate", abgekürzt BER). So wird in einer optischen Empfangseinheit das optische Signal in ein elektrisches Signal gewandelt und anschließend in der Bitmitte abgetastet. Anschließend wird ein Amplituden-Histogramm respektive eine Amplitudenverteilung gebildet, aus dem dann die Mittelwerte und Varianzen der beiden Symbole für die logische Null und Eins ermittelt werden. Der Q-Faktor ist definiert als Differenz aus den derart erhaltenen Mittelwerten der Logischen Null und Eins geteilt durch die Summe aus den Varianzen der Amplituden-Verteilungen. Der Q-Faktor kann ebenfalls aus einem Augendiagramm bestimmt werden, indem in vertikaler Richtung die Augenöffnung aufgenommen wird. Des Weiteren besteht ein Zusammenhang zwischen dem Q-Parameter und der Bitfehlerrate BER. Daher kann der Q-Parameter ebenfalls durch Verschieben der Entscheiderschwelle gewonnen werden, wenn die Bitfehlerrate BER gegen die Entscheiderschwelle aufgetragen wird. Im Minimum der aufgetragenen Kurve, welches in der Regel durch Interpolation ermittelt wird, ist die optimale Entscheiderschwelle abzulesen, die in Zusammenhang mit dem OSAR steht. Ferner kann der Q-Parameter durch das Zählen der pro Zeiteinheit im FEC-Decoder erkannten Fehler ermittelt werden.

Eine beispielhafte Messung zur Bestimmung des OSNR für einen Kanal ist in Fig. 1b aufgetragen. Figur 1b zeigt in einer graphischen Darstellung die Abhängigkeit des Q-Faktors (hier aufgetragen in dB) von dem hinzugefügten optischen Rauschsignal AS. Auf der x-Achse ist der Einfachheit wegen das Verhältnis aus optischen Signal DS zum hinzugefügten Rauschsignal AS in dB aufgetragen. Bei sehr kleinen hinzugefügten ASE-Leistungen dominiert das OSAR der Strecke, und die Signalqualität hängt nur sehr schwach von der Leistung der hinzugefügten ASE ab (flacher Verlauf für große Werte des OSAR durch zugefügte ASE). Für sehr große Leistungen der hinzugefügten ASE spielt hingegen die von der Strecke erzeugt ASE kaum noch eine Rolle und die Signalqualität hängt quasi nur noch von der Ausgangsleistung der ASE-Quelle ab (ansteigender Verlauf für kleine Werte des OSAR durch hinzugefügte ASE). Da die ASE-Quelle kalibriert ist, lässt sich die von der Strecke erzeugte ASE-Leistung bzw. der von der Strecke herrührende OSAR-Wert durch Extrapolation des ansteigenden Verlaufs bis zum Schnittpunkt mit dem flachen Verlauf ermitteln. Eine Umrechnung der Signalqualität bzw. der Bitfehlerquote in dBQ-Werte erweist sich als zweckmäßig, weil dann ein linearer Zusammenhang zwischen dem OSAR in dB und der Signalqualität resultiert.

Als Ausführungsbeispiel soll das in Fig. 1a dargestellte Blockschaltbild und die graphische Darstellung in Fig. 1b betrachtet werden. Die kalibrierte ASE-Quelle ASEQ kann Rauschleistungen hinzufügen, die an den Empfängern alleine (ohne Rauschen der Strecke) zu OSAR-Werten von 0 bis 40 dB bei einer Referenzbandbreite von 0,1 nm führt. Mittels der Steuer- und Regeleinheit SRE wird zur Ermittlung des OSAR-Werts eines Kanals durch die Strecke an der ASE-Quelle einen OSAR-Wert von 40 dB eingestellt und beispielsweise anhand der vom FEC-Decoder erkannten Fehler pro Zeiteinheit die Bitfehlerquote vor der FEC ermittelt. Anschließend erhöht die Steuer- und Regeleinheit SRE den von der ASE-Quelle beigesteuerten OSAR-Wert in Schritten von 2 dB bis zum Endwert von 0 dB und misst dabei jeweils die Signalqualität. Nach der Messung werden beispielsweise mittels eines digitalen Signalprozessors DSP innerhalb der Steuer- und Regeleinheit SRE aus den Bitfehlerraten vor der FEC die dBQ-Werte berechnet, eine erste Gerade G1 an den flachen Bereich für hohe OSAR-Werte der Quelle angenähert und eine zweite Gerade G2 an den linear ansteigenden Bereich für kleine OSAR-Werte der Quelle. Aus dem Schnittpunkt S der beiden Geraden G1 und G2 liest die Steuer- und Regeleinheit SRE den OSAR-Beitrag der Strecke für den Kanal ab. Anschließend wiederholt die Steuer- und Regeleinheit SRE die Schritte des Messverfahrens für die anderen Kanäle.

Alternativ kann die Steuer- und Regeleinheit SRE auch pro OSAR-Wert der Quelle die Signalqualität aller Kanäle bestimmen und diese speichern, bevor er zum nächsten OSAR-Wert übergeht. Das Verfahren verlängert die Gesamt-Messzeit pro Kanal, was bei schwankendem OSAR-Beitrag der Strecke eher ungünstig wirkt. Bei ausreichend stabiler Strecke muss bei der Messung aller Kanäle pro OSAR-Wert die Quelle den OSAR-Bereich nur einmal durchfahren, was Messzeit einspart.

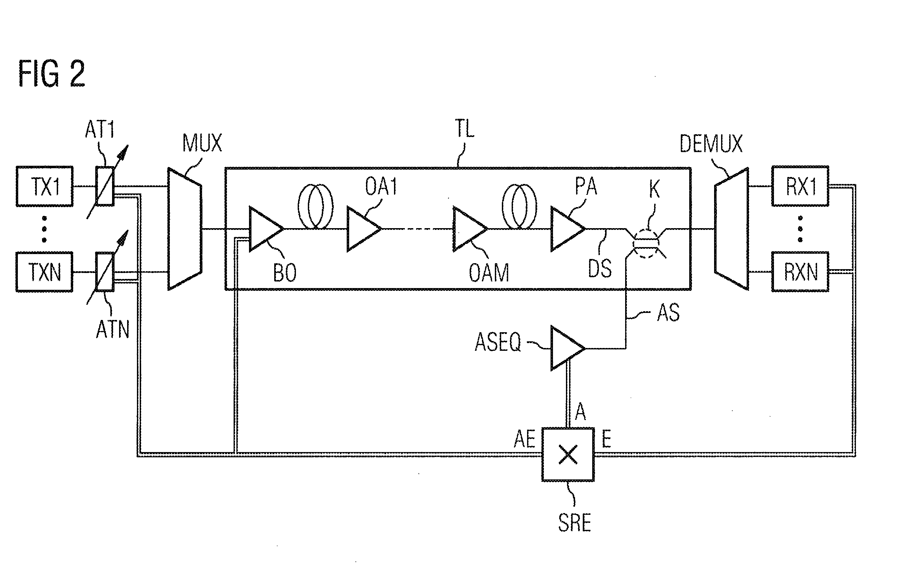

Mit dem erfindungsgemäßen Verfahren zur messtechnischen Bestimmung des OSAR lässt sich auch bei Systemen mit engem Kanalbstand bzw. schmalbangigen Filtern entlang der Strecke eine Preemphase durchführen, die zu gleichen OSAR-Werten am Ausgang des Systems führt. Zur Erläuterung der Preemphase soll Fig. 2 betrachtet werden.

Das Blockschaltbild in Fig. 2 zeigt ein optisches Übertragungssystem mit Wellenlängen Multiplex. Die Sendeeinheiten TX1 bis TXN für N Kanäle sind über variable Dämpfungsglieder AT1 bis ATN mit einem Multiplexer MUX verbunden, in dem die Datensignale der einzelnen Kanäle zusammengefasst werden. Das derart generierte WDM-Signal wird einer optischen Übertragungsstrecke TL zugeführt. Entlang der optischen Übertragungsstrecke sind mehrere optische Verstärker angeordnet. An den ersten optischen Verstärker BO, der auch als Booster bezeichnet wird, schließen sich die Inline-Verstärker OA1 bis OAM an. Vor dem Empfänger wird das WDM-Signal im so genannten Preamplifier PA nochmals verstärkt, bevor es im Demultiplexer DEMUX wieder in seine Einzelkanäle zerlegt wird und den einzelnen Empfangseinheiten der einzelnen Kanäle RX1 bis RXN zugeführt wird.

Zur Durchführung der Preemphase ist in Fig. 2 die Steuer- und Regeleinheit SRE mit den hinter den Sendeeinheiten angeordneten variablen Dämpfungsgliedern AT1 bis ATN und dem Booster BO verbunden. Die Steuer- und Regeleinheit SRE stellt nach dem Hochfahren des Systems zunächst gleiche Pegel aller Kanäle hinter dem Multiplexer ein. Beispielsweise werden dazu alle variablen Dämpfungsglieder AT1 bis ATN auf maximale Dämpfung gestellt, danach für einen Kanal nach dem anderen mit jeweils minimaler Dämpfung der variablen Dämpfungsglieder das Eingangssignal in den Booster bestimmt und abschließend alle Dämpfungsglieder-Einstellungen so gewählt, dass sich gleiche Eingangspegel in den Booster ergeben. Im nächsten Schritt ermittelt die Steuer- und Regeleinheit SRE mit dem erfindungsgemäßen Verfahren die OSAR-Werte der Kanäle am Ausgang der Strecke. Aus diesen berechnet er neue Einstellungen der variablen Dämpfungsglieder AT1 bis ATN am Eingang und wiederholt die Messungen, bis die Schwankungen der OSAR-Werte den vorgegebenen Grenzwert unterschreiten.

Zusätzlich lässt sich mit dem erfindungsgemäßen Verfahren eine stabile Preemphase mit dem Ziel gleicher Signalqualität aller Kanäle am Streckenende realisieren. Bei einer solchen Preemphase werden vorteilhaft auch Signalverzerrungen bereinigt. Dazu führt die Steuer- und Regeleinheit SRE zunächst die im vorigen Absatz beschriebene Preemphase auf gleiche OSAR-Werte am Streckenende durch. Der dabei ermittelte Systemzustand dient als Startwert für die Feinabstimmung auf gleiche Signalqualität, die die Steuer- und Regeleinheit SRE mit Hilfe der Information aus den Empfängern durchführt. Bei dieser Preemphase werden die Q-Faktoren jedes Kanals gemessen. Liegen die Q-Werte nicht innerhalb eines Toleranzbereiches, werden die variablen Dämpfungsglieder AT1 bis ATN in ihrer Dämpfung verstellt. Anschließend werden die Q-Parameter erneut gemessen. Die Däpfungsglieder werden solange verstellt, bis die Q-Parameter am Ende der Übertragungsstrecke gleich sind. Durch den Zwischenschritt über gleiche OSAR-Werte der Kanäle ergibt sich eine deutlich bessere Konvergenz des Verfahrens als bei einer Preemphase nur mit Signalqualitätswerten.

Das Blockschaltbild aus Fig. 3 zeigt wie Fig. 2 ein optisches Übertragungssystem, das eine Ausführungsvariante der erfindungsgemäßen Anordnung zur Bestimmung des optischen Signal-Rausch-Verhältnisses enthält. Statt einer optischen Rauschquelle ASEQ, die wie in Fig. 1 und 2 über einen Koppler mit der Übertragungsstrecke TL verbunden ist, ist hier für jeden Kanal eine optische Rauschquelle vorgesehen. Diese Variante ist am besten zu realisieren, wenn die Empfangseinheiten RX1 bis RXN über eigene optische Verstärker verfügen, was speziell bei Systemen mit Datenraten von 40 GBit/s und darüber zweckmäßig erscheint. Diese Verstärker können alternativ zur Erzeugung der ASE für die OSAR-Messung verwendet werden. Dazu müssen, wie in Fig. 3 dargestellt, vor den Einkanalverstärkern variable optische Dämpfungsglieder eingefügt werden. Das Hinzufügen von Dämpfung vor einem optischen Verstärker verschlechtert das Rauschverhalten und bietet die Möglichkeit, das OSAR künstlich zu verschlechtern. Der Zusammenhang zwischen eingestellter Dämpfung, dem Betriebszustand des Einkanalverstärkers und der erzeugten ASE lässt sich vor Inbetriebnahme des Systems durch Kalibrierung ermitteln. Durch die Kombination aus variablem Dämpfungsglied und nachgeschaltetem optischen Verstärker können demnach kalibrierte optische Rauschquellen verwirklicht werden.

Für die OSAR-Messung während der Inbetriebnahme des Systems stellt die Steuer- und Regeleinheit SRE zunächst die minimale Dämpfung ein, ermittelt aus den Kanlibrierdaten das hinzugefügte OSAR und erhält vom Empfänger die Angabe über die Signalqualität. Anschließend erhöht die Steuer- und Regeleinheit SRE die Dämpfung in mehreren Schritten und wiederholt den Messzyklus. Als Ergebnis ergibt sich ein Verlauf wie der in Fig. 1b dargestellte, aus dem mit dem oben beschriebenen Verfahren das OSAR der Strecke ermittelt werden kann.

## Patentansprüche

1. Verfahren zur Ermittlung des optischen Signal-Rausch-Verhältnisses für ein optisches Übertragungssystem,
**dadurch gekennzeichnet ,**
**dass** empfangsseitig einem optischen Datensignal (DS) ein optisches Rauschsignal (AS) hinzugefügt wird,
**dass** eine Signalqualität (Q) des empfangenen Datensignals ermittelt wird,
**dass** die Größe des hinzugefügten Rauschsignals (AS) variiert wird und eine Funktion der Signalqualität des empfangenen Datensignals in Abhängigkeit vom hinzugefügten Rauschsignal (AS) ermittelt wird,
**dass** für kleine Werte des hinzugefügten Rauschsignals (AS) eine erste Gerade (G1) an die zuvor ermittelte Funktion angenähert wird,
**dass** für große Werte des hinzugefügten Rauschsignals (AS) eine zweite Gerade (G2) an die zuvor ermittelte Funktion angenähert wird,
**dass** der Schnittpunkt (S) der ersten Geraden (G1) mit der zweiten Geraden (G2) das optische Signal-Rausch-Verhältnis (OSNR) angibt.

2. Verfahren nach Anspruch 1,
**dadurch gekennzeichnet,**
**dass** für das optische Datensignal (DS) ein WDM-Signal mit einer Vielzahl von Kanälen verwendet wird, und
**dass** die Funktion der Signalqualität (Q) des empfangenen Datensignals für mindestens einen Kanal des WDM-Signals ermittelt wird.

3. Verfahren nach Anspruch 1 oder 2,
**dadurch gekennzeichnet,**
**dass** die Signalqualität (Q) des empfangenen Datensignals mittels des Q-Faktors anhand der Bitfehlerrate des empfangenen Datensignals oder anhand der Augenöffnung eines Augendiagramms des empfangenen Datensignals oder durch Aufnahme eines Amplituden-Histogramms des empfangenen Datensignals ermittelt wird.

4. Verfahren nach einem der vorhergehenden Ansprüche,
**dadurch gekennzeichnet,**
**dass** sendeseitig Leistungspegel von mindestens zwei Kanälen des WDM-Signals solange variiert werden, bis sich empfangsseitig für die mindestens zwei Kanäle gleiche ermittelte optische Signal-Rausch-Verhältnisse (OSNR) einstellen.

5. Verfahren nach Anspruch 4,
**dadurch gekennzeichnet,**
**dass** sendeseitig Leistungspegel von mindestens zwei Kanälen des WDM-Signals solange variiert werden, bis sich empfangsseitig für die mindestens zwei Kanäle gleiche Werte für die Signalqualität (Q) einstellen.

6. Empfangseinrichtung für ein optisches Übertragungssystem, aufweisend einen Demultiplexer (DEMUX), der übertragene optische WDM-Signale in seine Einzelkanäle zerlegt, und an jedem Ausgang einen Kanal abgibt, wobei jeder dieser Ausgänge jeweils mit einer, eine Einheit zur Ermittlung der Signalqualität (Q) aufweisenden Empfangseinheit (RX1, RX2, ... RXN) verbunden ist,
**dadurch gekennzeichnet,**
**dass** im Bereich des Demultiplexers (DEMUX) mindestens eine regelbare optische Rauschquelle (ASEQ) und
eine Steuer- und Regeleinheit (SRE) mit mindestens zwei Anschlüssen vorgesehen ist, deren erster Anschluss (A) mit einem Eingang der Rauschquelle verbunden ist und deren zweiter Anschluss (E) mit einem Ausgang mindestens einer Empfangseinheit (RX1, RX2, ... RXN) verbunden ist,
wobei die Steuer- und Regeleinheit (SRE) derart ausgebildet ist, dass für mindestens einen Kanal nach einem Verfahren gemäß Anspruch 1 das optische Signal-Rausch-Verhältnis (OSNR) ermittelt wird.

7. Empfangseinrichtung nach Anspruch 6,
**dadurch gekennzeichnet,**
**dass** die regelbare optische Rauschquelle (ASEQ) über ein dem Demultiplexer (DEMUX) vorgeschaltetes optisches Koppelelement (K) an die optische Übertragungsstrecke (TL) angeschlossen ist.

8. Empfangseinrichtung nach Anspruch 6,
**dadurch gekennzeichnet,**
**dass** die regelbare optische Rauschquelle (ASEQ) als optischer Verstärker (PA) mit vorgeschaltetem variablem Dämpfungsglied entlang der optischen Übertragungsstrecke (TL) ausgestaltet ist.

9. Empfangseinrichtung nach Anspruch 6,
**dadurch gekennzeichnet,**
**dass** dem Demultiplexer (DEMUX) pro Kanal eine regelbare optische Rauschquelle (ASEQ1, ASEQ2, ... ASEQN) nachgeschaltet ist.

10. Empfangseinrichtung nach Anspruch 9,
**dadurch gekennzeichnet,**
**dass** die regelbaren optischen Rauschquellen (ASEQ1, ASEQ2, ... ASEQN) als optischer Verstärker mit vorgeschaltetem variablem Dämpfungsglied ausgestaltet ist.

11. Empfangseinrichtung nach einem der vorhergehenden Ansprüche 6-10,
**dadurch gekennzeichnet,**
**dass** die Steuer- und Regeleinheit (SRE) einen dritten Anschluss (AE) aufweist, der mit mindestens einem einer optischen Sendeeinheit (TX1, TX2, ... , TXN) nachgeschalteten variablen Dämpfungsglied (AT1, AT2, ... ATN) und einem ersten optischen Verstärker (BO) der optischen Übertragungsstrecke (TL) verbunden ist.

## Claims

1. Method for determining the optical signal-to-noise ratio for an optical transmission system, **characterized in that** an optical noise signal (AS) is added to an optical data signal (DS) on the receiver side
that a signal quality (Q) of the data signal received is determined,
that the magnitude of the added noise signal (AS) is varied and a function of the signal quality of the data signal received is determined in dependence on the added noise signal (AS),
that a first straight line (G1) is approximated to the previously determined function for small values of the added noise signal (AS),
that a second straight line (G2) is approximated to the previously determined function for large values of the added noise signal (AS),
that the point of intersection (S) of the first straight line (G1) with the second straight line (G2) specifies the optical signal-to-noise ratio (OSNR).

2. Method according to Claim 1
**characterized in that** a WDM signal with a multiplicity of channels is used for the optical data signal (DS), and
that the function of the signal quality (Q) of the data signal received is determined for at least one channel of the WDM signal.

3. Method according to Claim 1 or 2, **characterized in that** the signal quality (Q) of the data signal received is determined by means of the Q factor with reference to bit error rate of the data signal received or by means of the eye opening of an eye pattern of the data signal received or by recording an amplitude histogram of the data signal received.

4. Method according to one of the preceding claims, **characterized in that** power levels of at least two channels of the WDM signal are varied on the transmitter side until identical optical signal-to-noise ratios (OSNR) determined occur for the at least two channels on the receiver side.

5. Method according to Claim 4, **characterized in that** power levels of at least two channels of the WDM signal are varied on the transmitter side until identical values for the signal quality (Q) occur for the at least two channels on the receiver side.

6. Receiver device for an optical transmission system, having a demultiplexer (DEMUX) which splits transmitted optical WDM signal and to its individual channels and delivers one channel at each output, each of these outputs in each case being connected to one receiver unit (RX1, RX2, ... RXN) having a unit for determining the signal quality (Q),
**characterized in that** in the area of the demultiplexer (DEMUX), at least one controllable optical noise source (ASEQ) and one open- and closed-loop control unit (SRE) having at least two connections is provided, the first connection (A) of which is connected to one input of the noise source and the second connection (E) of which is connected to an output of at least one receiver unit (RX1, RX2, ... RXN),
the open- and closed-loop control unit (SRE) being arranged in such a manner that the optical signal-to-noise ratio (OSNR) is determined in accordance with a method according to Claim 1 for at least one channel.

7. Receiver device according to Claim 6, **characterized in that** the controllable optical noise source (ASEQ) is connected to the optical transmission link (TL) via an optical coupling element (K) preceding the demultiplexer (DEMUX).

8. Receiver device according to Claim 6, **characterized in that** the controllable optical noise source (ASEQ) is arranged as optical amplifier (PA) with preceding variable attenuating element along the optical transmission link (TL).

9. Receiver device according to Claim 6, **characterized in that** the demultiplexer (DEMUX) is followed by a controllable optical noise source (ASEQ1, ASEQ2, ... ASEQN) per channel.

10. Receiver device according to Claim 9 **characterized in that** the controllable optical noise sources (ASEQ1, ASEQ2, ... ASEQN) are arranged as optical amplifier with preceding variable attenuating element.

11. Receiver device according to one of the preceding Claims 6 - 10, **characterized in that** the open- and closed-loop control unit (SRE) has a third connection (AE) which is connected to at least one variable attenuating element (AT1, AT2, ... ATN) following an optical transmitter unit (TX1, TX2, ... TXN) and to a first optical amplifier (BO) of the optical transmission link (TL).

## Revendications

1. Procédé de détermination du rapport signal/bruit optique pour un système de transmission optique, **caractérisé en ce que** :
côté réception, un signal de bruit optique (AS) est ajouté à un signal de données optique (DS) ;
une qualité de signal (Q) du signal de données reçu est déterminée ;
l'ampleur du signal de bruit ajouté (AS) subit des variations et une fonction de la qualité de signal du signal de données reçu est déterminée en fonction du signal de bruit ajouté (AS) ;
pour de petites valeurs du signal de bruit ajouté (AS), une première droite (G1) est approchée de la fonction déterminée préalablement ;
pour de grandes valeurs du signal de bruit ajouté (AS), une deuxième droite (G2) est approchée de la fonction déterminée préalablement ;
l'intersection (S) de la première droite (G1) et de la deuxième droite (G2) indique le rapport signal/bruit optique (OSNR).

2. Procédé selon la revendication 1, **caractérisé en qu'**est utilisé, pour le signal de données optique (DS), un signal WDM avec une pluralité de canaux et en ce que la fonction de la qualité de signal (Q) du signal de données reçu est déterminée pour au moins un canal du signal WDM.

3. Procédé selon la revendication 1 ou 2, **caractérisé en ce que** la qualité de signal (Q) du signal de données reçu est déterminée au moyen du facteur Q à l'aide du taux d'erreur binaire du signal de données reçu ou à l'aide de l'ouverture d'oeil d'un diagramme en oeil du signal de données reçu ou par enregistrement d'un histogramme d'amplitude du signal de données reçu.

4. Procédé selon l'une des revendications précédentes, **caractérisé en ce que**, côté émission, des niveaux de puissance d'au moins deux canaux du signal WDM subissent des variations jusqu'à l'obtention, côté réception, pour les au moins deux canaux, de rapports signal/bruit optiques (OSNR) identiques déterminés.

5. Procédé selon la revendication 4, **caractérisé en ce que**, côté émission, des niveaux de puissance d'au moins deux canaux du signal WDM subissent des variations jusqu'à l'obtention, côté réception, pour les au moins deux canaux, de valeurs identiques de la qualité du signal (Q).

6. Dispositif de réception pour un système de transmission optique, comportant un démultiplexeur (DEMUX) qui décompose des signaux WDM optiques transmis en ses différents canaux et délivre un canal à chaque sortie, chacune de ces sorties étant reliée respectivement à une unité de réception (RX1, RX2, ..., RXN) qui comporte une unité pour déterminer la qualité de signal (Q), **caractérisé en ce que**
- sont prévues, dans la zone du démultiplexeur (DEMUX), au moins une source de bruit optique réglable (ASEQ) et une unité de commande et de réglage (SRE) avec au moins deux raccordements dont le premier (A) est relié à une entrée de la source de bruit et le deuxième (E) est relié à une sortie d'au moins une unité de réception (RX1, RX2, ..., RXN),
- l'unité de commande et de réglage (SRE) étant réalisée de manière telle que, pour au moins un canal, le rapport signal/bruit optique (OSNR) est déterminé selon un procédé selon la revendication 1.

7. Dispositif de réception selon la revendication 6, **caractérisé en ce que** la source de bruit optique réglable (ASEQ) est raccordée au trajet de transmission optique (TL) par l'intermédiaire d'un élément de couplage optique (K) monté en amont du démultiplexeur (DEMUX).

8. Dispositif de réception selon la revendication 6, **caractérisé en ce que** la source de bruit optique réglable (ASEQ) se présente sous la forme d'un amplificateur optique (PA) avec un élément d'amortissement variable en amont le long du trajet de transmission optique (TL).

9. Dispositif de réception selon la revendication 6, **caractérisé en ce qu'**est montée, en aval du démultiplexeur (DEMUX) et pour chaque canal, une source de bruit (ASEQ1, ASEQ2, ..., ASEQN) optique réglable.

10. Dispositif de réception selon la revendication 9, **caractérisé en ce que** les sources de bruit optiques réglables (ASEQ1, ASEQ2, ..., ASEQN) se présentent sous la forme d'un amplificateur optique avec un élément d'amortissement variable en amont.

11. Dispositif de réception selon l'une des revendications précédentes 6 à 10, **caractérisé en ce que** l'unité de commande et de réglage (SRE) comporte un troisième raccordement (AE) qui est relié à au moins un élément d'amortissement variable (AT1, AT2, ..., ATN) monté en aval d'une unité d'émission optique (TX1, TX2, ..., TXN) et à un premier amplificateur optique (BO) du trajet de transmission optique (TL).
